# EUROPÄISCHE PATENTANMELDUNG

(11) **EP 4 708 645 A1**
(43) Veröffentlichungstag der Anmeldung: **11.03.2026**
(21) Anmeldenummer: 24199504.2
(22) Anmeldetag: 10.09.2024
(51) Int. Cl.: H02K 9/06, H02K 9/22, H02K 5/18

(54) **DYNAMOELEKTRISCHE MASCHINE MIT EINEM THERMOSIPHON MIT HOCHEFFIZIENTER KONDENSATOREINHEIT**

(71) Anmelder: Innomotics GmbH, 90441 Nürnberg (DE)
(72) Erfinder: Büttner, Klaus, 97618 Hollstadt (DE); Katzenberger, Tobias, 97631 Bad Königshofen STT Untereßfeld (DE); Kirchner, Florian, 97705 Burkardroth (DE); Kirchner, Klaus, 97645 Ostheim (DE); Warmuth, Matthias, 97618 Windshausen (DE)
(74) Vertreter: Siemens Patent Attorneys

(57) **Zusammenfassung**

Die Erfindung betrifft eine rotatorische dynamoelektrische Maschine (1) mit einem Stator (2) und einen um eine Achse (21) drehbar gelagerten Rotor (5),
wobei der Rotor (5) mit einer Hohlwelle (6) drehfest und thermisch leitend verbunden ist,
wobei die Hohlwelle (6), einen abgeschlossenen Hohlraum bildet und als Thermosiphon ausgebildet ist, der axial zumindest eine Verdampferzone (8) und eine Kondensatorzone (9) aufweist,
wobei die Kondensatorzone (9) zumindest einen Lüfter (12) und zumindest eine thermisch an die Hohlwelle (6) gekoppelte Kühlscheibe (17) aufweist, wobei Lüfter (12) und Kühlscheibe (17) koaxial zur Hohlwelle (6) angeordnet sind und über die Wandung der Hohlwelle (6) thermisch leitend mit dem Kondensatorabschnitt (9) verbunden sind.

## Beschreibung

Die Erfindung betrifft eine dynamoelektrische Maschine mit einem in einer Welle ausgebildeten Thermosiphon mit hocheffizienter Kondensatoreinheit.

Rotatorische dynamoelektrische Maschinen kühlen u.a. ihre Rotoren normalerweise mit einem durch einen Axiallüfter verursachten Kühlluftstrom. Falls jedoch die Wärmelast u.a. des Rotors größer ist, reicht ein derartiger Kühlluftstrom zur Kühlung nicht mehr aus. Es werden dabei dann Hohlwellen vorgesehen, in denen ein Kühlmedium enthalten ist, das die Wärme des Rotors aus und über diese Welle axial nach außen abführt.

Ein derartiger Thermosiphon weist einen Verdampfer und einen Kondensator auf, wobei der Kondensator in diesem Kreislauf des Thermosiphon generell als das limitierende Element einer derartigen Kühlung betrachtet werden kann. Somit gilt es, die Wärmeabfuhr auf der Lüfterseite zu verstärken. Bisherige Lüfter, die u. a. auch einen Luftstrom erzeugen, um den Motor über das Gehäuse zu kühlen, weisen jedoch nur eine relativ geringe Wärmekopplung zur Welle auf, da die Nabe des Lüfters vergleichsweise kurz ist und die Anbindung von der Lüfternabe zum Lüfterteller einen geringen Querschnitt aufweist.

Eine Vergrößerung des Lüfters und somit Steigerung der Luftleistung würde zwar auch mehr Wärmeenergie aus der Welle ziehen und die Leistung des Kondensators steigern, aber auch den Reibfaktor des Lüfters erhöhen.

Bei hocheffizienten Motoren größer IE3 wirkt sich jedoch dieser Reibfaktor des Lüfters erheblich auf die Effizienz des Motors aus. Eine Überdimensionierung des Lüfters nur um die Funktion des Kondensators zu verbessern, würde somit den positiven Effekt des Thermosiphons in der Welle wieder schmälern.

Somit wird bisher die Kondensatorseite mit einer Luftleistung ausgeführt, die nur auf die erforderliche Motorkühlung abgestimmt ist. Die daraus sich ergebende eingeschränkte Wirkung des Kondensators im Thermosiphon wurde entsprechend hingenommen.

Eine weitere Möglichkeit zeigt beispielsweise die DE 10 2009 051 114 A1, wobei eine elektrische Maschine mit einem Rotor, der eine Hohlwelle aufweist, die einen abgeschlossenen Hohlraum ausgebildet. Der abgeschlossene Hohlraum zur Aufnahme eines Kältemittels weist eine dreidimensionale Transportstruktur zum Transport des Kältemittels auf. Damit wird die anfallende Wärme über diese Transportstruktur axial nach außen gegeben und dort über einen Kühlluftstrom rückgekühlt.

Nachteilig dabei ist, dass für eine ausreichende Rückkühlung des Kältemittels, eine dementsprechende axial lange Rückkühlungsflächen vorzusehen sind, um eine ausreichende Kühlung des Rotors zu erhalten.

Ausgehend davon liegt der Erfindung die Aufgabe zugrunde eine kompakte dynamoelektrische Maschine mit einem in der Welle angeordnetem Thermosiphon zu schaffen, insbesondere für die Energieeffizienzklasse IE3 und größer. Dabei soll auch die Geräuschentwicklung eines Lüfters möglichst gering sein.

Die Lösung der gestellten Aufgabe gelingt durch die Merkmale des unabhängigen Anspruchs.

Vorteilhafte Ausgestaltungen sind den abhängigen Ansprüchen zu entnehmen.

Erfindungsgemäß wird zur verbesserten Wärmeabfuhr am Kondensator einer Hohlwelle einer rotatorischen dynamoelektrischen Maschine eine Kombination aus Lüfter und Kühlscheiben eingesetzt. Dies ermöglicht bei vergleichsweise geringer Geräuschentwicklung des Lüfters eine ausreichende Kühlung einer kompakten dynamoelektrischen Maschine. Die Hohlwelle ist somit als Thermosiphon ausgeführt mit zumindest einem Verdampferabschnitt und einem Kondensatorabschnitt.

Der Lüfter der rotatorischen dynamoelektrischen Maschine, insbesondere eines Motors ist lediglich entsprechend der erforderlichen Kühlleistung dieses Motors ausgelegt. Zur weiteren Steigerung der Wärmeabfuhr, insbesondere über die Hohlwelle werden erfindungsgemäß zusätzlich Kühlscheiben auf der Hohlwelle im Bereich des Kondensatorabschnitts vorgesehen, die jedoch im Betrieb der dynamoelektrischen Maschine - also bei Drehung der Hohlwelle - nahezu keine Reibung verursachen, die den Wirkungsgrad der dynamoelektrischen Maschine reduzieren würde.

Da die Kühlscheiben mit der Hohlwelle rotieren und die Außenkontur der Kühlscheiben idealerweise ohne Unterbrechung ist, wird eine Schaufelwirkung - also eine Reibung - vermieden. Durch die Kühlscheiben werden lediglich in kompakter Form die Rückkühlflächen des Kondensatorabschnitts vergrößert.

Die Vorteile des Motorlüfters liegen in der Bildung eines Luftstroms (durch Lüfterflügel), der über das Gehäuse des Motors ggf. mittels einer Lüfterhaube geführt wird. Jedoch hat eine zu große Lüfterreibung negative Auswirkung auf Motoreffizienz. Des Weiteren weist die Nabe eines Lüfters eine vergleichsweise geringe Wärmeanbindung an die (Hohl)-Welle auf.

Die Kühlscheiben weisen eine vergleichsweise gute thermische Anbindung der (Hohl)-Welle auf, ohne dass eine effizienz-reduzierende Reibungsenergie aufzuwenden ist. Durch die großen Wärmeabgabeflächen der Kühlscheiben stellt sich eine gute Wärmeabstrahlung im Bereich der Kondensatoreinheit ein. Diese Kühlscheiben liefern jedoch nahezu keinen Beitrag zu einer nennenswerten Luftkühlung.

Durch den erfindungsgemäßen Aufbau des als Kondensatorabschnitt ausgeführten axialen Teil der Hohlwelle, werden die Vorteile eines Motorlüfters, bis zu einem erforderlichen Maß, mit den Vorteilen von Kühlscheiben kombiniert.

Vorteilhafterweise sind die Kühlscheiben als einzelne Module axial auf die Hohlwelle zu platzieren. Dies ermöglicht - sofern auf der Hohlwelle noch "Platz" ist - ein modulares Ansetzen bzw. Aufsetzen weiterer Module, um die Kühlleistung der Kondensatoreinheit zu erhöhen. Ein Modul kann dabei eine oder mehrere Kühlscheiben aufweisen.

Ebenso können die Module mit ihren Kühlscheiben bzw. Kühlscheiben axial auch hinter dem Lüfter angeordnet sein, also zwischen Motor und Lüfter. Vorteilhafterweise hat dabei dann der Lüfter Durchbrüche möglichst nahe an der Welle, um die Kühlscheiben mit Luft zu versorgen. Die Durchbrüche sind radial nahe der Welle platziert und bewirken einen vernachlässigbar kleinen Luftstrom zwischen den Kühlscheiben, ohne nennenswerte Reibwirkung.

In einer weiteren Ausführung sind die Kühlscheiben vor dem Lüfter platziert und sind im Durchmesser Richtung Lüfter ansteigend angeordnet. Dies führt zu einer zusätzliche Kühlwirkung, da die von den Kühlscheiben abgestrahlte erwärmte Luft durch den Lüfter besser abgeführt wird.

Der Thermosiphon kann sowohl zur Kühlung des Rotorpakets und damit des Kurzschluss Käfigs am Asynchronmotor genutzt werden, als auch zur Kühlung von Permanentmagneten im Rotor eines Permanenterregten-Synchron-Motors.

Damit kann die Effizienz des Motors bzw. die Haltbarkeit der Permanentmagnete gesteigert werden. Der Motor kann somit auch mit höherer Ausnutzung betrieben werden.

An dem als Verdampferabschnitt vorgesehenen Teil der Hohlwelle sind die Wärmequellen, wie z.B. das Blechpaket des Rotors, ev. Lagerinnenring, thermisch leitend mit der Außenwandung der Hohlwelle verbunden. An dem als Kondensatorabschnitt vorgesehenen Teil der Hohlwelle sind die Wärmesenken z.B. Lüfter, Kühlscheiben bzw. Kühlscheibenmodule ebenfalls thermisch leitend mit der dortigen Außenwandung der Hohlwelle verbunden. Zwischen Verdampferabschnitt und Kondensatorabschnitt befindet sich ggf. eine Transportzone des Thermosiphons.

Um die Effizienz der Kondensatorzone bzw. Kondensatorabschnitts zu steigern ist diese zumindest abschnittsweise konisch verlaufend ausgebildet.

Um die Effizienz der Kondensatorzone zu steigern kann dort an der Innenwandung der Hohlwelle zusätzlich zum konischen Verlauf oder stattdessen eine mikroskalige Struktur vorgesehen sein.

Vorteilhafterweise wird diese mikroskalige Struktur durch ein additives Herstellverfahren bereitgestellt.

In einer weiteren Ausführung können die Module und/oder der Lüfter axial direkt an ein Hohlwellensegment "angedruckt" werden. Mit anderen Worten: der Kondensatorabschnitt wird direkt an ein Hohlwellensegment "angedruckt".

Dabei wird nunmehr das Hohlwellensegment beispielsweise gegossen, gedreht, gebohrt, also mittels klassischen Herstellverfahren bereitgestellt, wobei sich daran der axiale Bereich, insbesondere die Kondensatorzone mit ihren mittels additive manufacturing hergestellten konstruktiven Elementen eine mikroskalige Struktur ausbildet, wie Rippen, Stegen, Zapfen, Noppen, Poren oder Hohlkörper. Damit wird das Hohlwellensegment vor allem mit einer Wandung der Kondensatorzone zumindest mechanisch verbunden. Der angedruckte Kondensatorabschnitt ist somit dicht.

Erfindungsgemäß wird somit mittels der Innenkontur der Kondensatorzone, also die Innenwandung der Hohlwelle durch spezielle Strukturen, wie z.B. feine stabförmige Elemente, porenmäßige Vernetzungen etc. eine Steigerung der Effizienz der dynamoelektrischen Maschine herbeigeführt. Dies gelingt erfindungsgemäß durch ein additives Herstellverfahren, indem schmale Materialstege von 0,1 mm bis zu einigen Millimetern, sowie Spalten von 0,01 mm bis zu ca. 2 mm oder mehr realisierbar sind. Eine bevorzugte Dicke der Materialstege liegt bei ca. 1 mm, eine bevorzugte Spaltenbreite bei ca. 0,5 mm. Die dadurch herbeigeführte erhebliche Vergrößerung der Oberfläche vor allem im Inneren des Kondensatorabschnitts, also an der Innenwandung der Hohlwelle erhöht die Effizienz der Rückkühlung dieses Kondensators.

Durch das additive Herstellverfahren wird außerdem eine dauerhafte Gasdichtheit und bleibende Festigkeit zwischen dem Hohlwellensegment und der Kondensatorzone, vor allem der Wandung der Kondensatorzone geschaffen. Durch die Kondensation einer Verdampferflüssigkeit in dieser mikroskaligen Struktur, bildet sich nunmehr ein Film an der Innenseite der Kondensatorzone. Dieser Film behindert jedoch bisher die Berührung des Dampfes mit der, insbesondere kühleren Oberfläche, wodurch der Kondensationsprozess blockiert oder zumindest verhindert wird. Durch Ausbildung der erfindungsgemäß feinen Stege, Rippen, Spalten oder Poren durch ein additives Fertigungsverfahren, ist nunmehr in jedem Fall gewährleistet, dass Dampf an die vergleichsweise kühle Innenkontur zum Anliegen kommt und damit eine Kondensation des Kühlmediums, also der Verdampferflüssigkeit eintreten kann.

Zusätzlich wird der Innenbereich dieses Kondensators konisch in Richtung Verdampferzone ausgebildet, um das Kondensat durch die axiale Komponente der Fliehkraft im Betrieb der dynamoelektrischen Maschine von der Kondensationsfläche weg in Richtung Verdampferzone zu befördern. Damit ist eine mehr als ausreichende Förderwirkung des Kühlmediums innerhalb der Hohlwelle geschaffen.

Der Lüfter und die Kühlschieben sind vorzugsweise aus einem gut wärmeleitfähigen Material wie Aluminium, Kupfer oder Aluminiumlegierungen oder Kupferlegierungen.

Somit ist nunmehr erfindungsgemäß ein Rotor mit einem Thermosiphon bereitgestellt, der eine erhöhte Effizienz im Kondensatorbereich bzw. Kondensatorzone aufweist, da der den Kondensatorabschnitt umgebende Kühler als Lüfter mit Kühlscheiben ausgebildet ist. Dies führt zusammen mit einem durch den Lüfter generierten Luftstrom im Betrieb der dynamoelektrischen Maschine zu einer effizienten Kühlung bei einem kompakten Aufbau der Maschine.

Die Erfindung sowie weitere vorteilhafte Ausgestaltungen werden anhand der prinzipiell dargestellten Ausführungsbeispiele näher beschrieben. Dabei zeigen:
- FIG 1: einen prinzipiellen Längsschnitt einer dynamoelektrischen rotatorischen Maschine,
- FIG 2: einen Kondensatorabschnitt,
- FIG 3-5: weitere Ausgestaltungen von Kondensatorabschnitten,
- FIG 6-8: eine Ausgestaltung von Kühlscheiben des Kondensatorabschnitts.

Es sei angemerkt, dass sich Begriffe wie "axial", "radial", "tangential" etc. auf die in der jeweiligen Figur bzw. im jeweils beschriebenen Beispiel zum Einsatz kommende Achse 21 beziehen. Mit anderen Worten beziehen sich die Richtungen axial, radial, tangential stets auf eine Achse 21 des Rotors 5 und damit auf die entsprechende Symmetrieachse des Stators 2. Dabei beschreibt "axial" eine Richtung parallel zur Achse 21, "radial" beschreibt eine Richtung orthogonal zur Achse 21, auf diese zu oder auch von ihr weg, und "tangential" ist eine Richtung, die in konstantem radialem Abstand zur Achse 21 und bei konstanter Axialposition kreisförmig um die Achse 21 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 5 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen kombinierbar, ohne das Wesen der Erfindung zu verlassen.

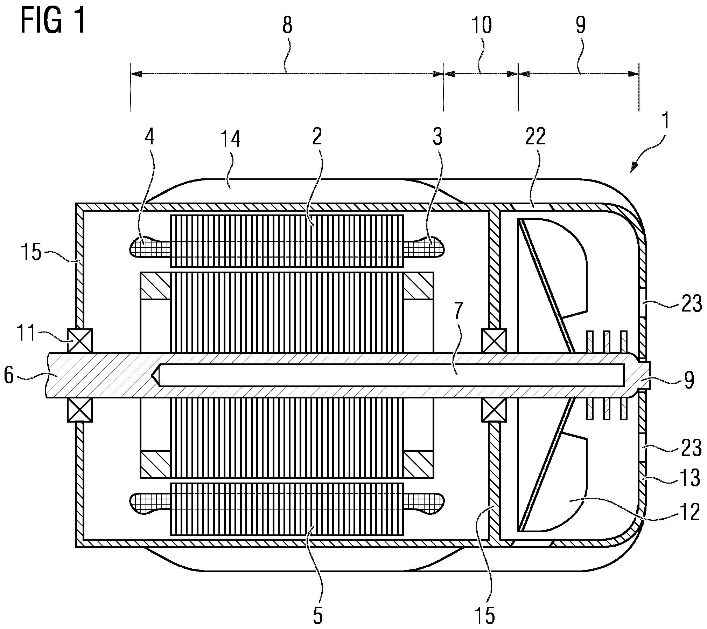

FIG 1 zeigt eine rotatorische dynamoelektrische Maschine 1, die einen Stator 2 und einen Rotor 5 aufweist. Der Rotor 5 ist in dieser Ausführungsform als Käfigläufer ausgeführt, kann jedoch auch ein permanenterregter Rotor, ein Rotor einer Reluktanzmaschine oder ein Rotor mit einem Wicklungssystem sein.

Der Rotor 5 ist drehfest mit einer Hohlwelle 6 verbunden, wobei die Hohlwelle 8 in Lagern 11 gelagert ist. Unter einer drehfesten Verbindung ist dabei eine drehmomentenübertragende Verbindung, wie z.B. eine Schrumpfverbindung oder eine andere Welle-Nabe-Verbindungen zwischen Blechpaket des Rotors 5 und der Hohlwelle 8 zu verstehen, die eine gute thermische Kopplung zwischen Blechpaket des Rotors 5 und der Außenwandung der Hohlwelle 6 in diesem Abschnitt (Verdampferabschnitt 8) gewährleistet. Ein Gehäuse der elektrischen Maschine 1 trägt die Lagerschilde 15. Am Gehäuse radial außerhalb des Stators 2, befinden sich axial verlaufende Kühlrippen 14, die einen von einem Lüfter 12 erzeugten Kühlluftstrom entlang des Gehäuses führen. Der Lüfter 12 ist dabei in einer Lüfterhaube 13 untergebracht, die Lufteinlassöffnungen 23 und Luftauslassöffnungen 22 aufweist.

Die Hohlwelle 6 ist in dieser Ausführung durch eine zentrale axiale Ausnehmung 7, z.B. eine Bohrung hohl ausgeführt und weist eine Verdampferabschnitt 8 im Bereich des Rotors 5 auf, optional eine Transportabschnitt 10, und eine Kondensatorabschnitt 9. Die axiale Erstreckung der Verdampferzone 8 der Hohlwelle 6 entspricht zumindest der axialen Erstreckung des Blechpakets des Rotors 5. Vorteilhafterweise ist bei einer derartigen Ausführung das axiale Längenverhältnis von Verdampferabschnitt 8 zu Kondensatorabschnitt 4:1.

In dieser Ausführung weist die Hohlwelle 6 eine zentrale Bohrung auf, es ist aber auch denkbar, dass mehrere achsparallele Bohrungen vorhanden sind, die in die dann dementsprechend ausgestaltete Kondensatorzone 9 münden.

Der Kondensatorabschnitt 9 weist einen Lüfter 12 und Kühlscheiben 17 oder Kühlscheibenmodule 18 auf, die jeweils thermisch gut leitend mit der Außenwandung des dortigen Abschnitts der Hohlwelle 6 verbunden sind.

Die Hohlwelle 6 bildet einen Thermosiphon, dessen Kondensatorabschnitt 9 aufgrund er Kühlscheiben 17 oder Kühlscheibenmodule 18 besonders leistungsfähig ist.

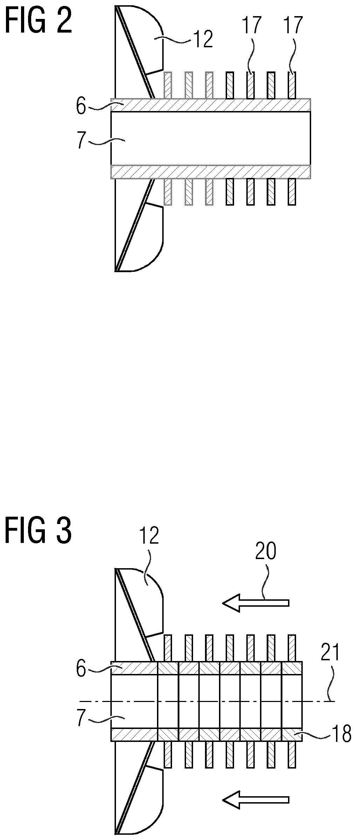

FIG 2 zeigt dabei wie axial an den Lüfter 12 Kühlscheiben 17 im Luftstrom 20 des Lüfter 12 auf der Hohlwelle 6 positioniert sind. Lüfter 12 Kühlscheiben 17 sind koaxial zur Hohlwelle 6 angeordnet.

FIG 3 zeigt, wie axial an den Lüfter 12 Kühlscheibenmodule 18 im Luftstrom 20 des Lüfter 12 auf der Hohlwelle 6 positioniert sind. Jedes Module 18 weist dabei eine Kühlscheibe 17 auf. Ein Modul 18 kann auch mit mehreren Kühlscheiben 17 versehen sein. Diese Module 18 können je nach Bedarf modular auf die bestehende Hohlwelle 6 aufgesetzt werden. Lüfter 12 und die Module 18 sind koaxial zur Hohlwelle 6 angeordnet.

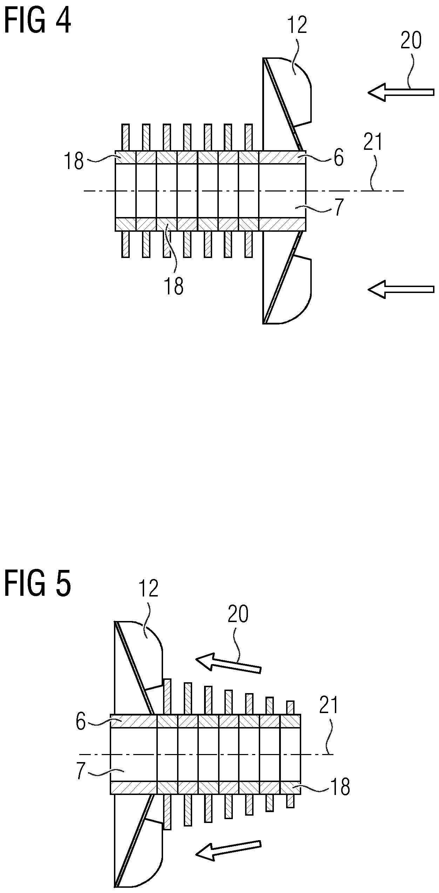

FIG 4 zeigt, wie axial an den Lüfter 12 Kühlscheibenmodule 18 hinter dem Lüfter 12 auf der Hohlwelle 6 positioniert sind. Vorteilhafterweise weist dann der Lüfter 12 im Bereich seiner Nabe, also nahe der Hohlwelle 6 Durchbrüche 19 auf, um die Kühlscheiben 17 mit Luft zu versorgen. Jedes Module 18 weist dabei eine Kühlscheibe 17 auf. Ein Modul 18 kann auch mit mehreren Kühlscheiben 17 versehen sein. Lüfter 12 und die Module 18 sind koaxial zur Hohlwelle 6 angeordnet.

FIG 5 zeigt Kühlscheiben 17, die vor dem Lüfter 12 im Luftstrom 20 auf der Hohlwelle 6 platziert und in Richtung Lüfter 12 im Durchmesser ansteigend angeordnet sind. Somit erzielt man eine zusätzliche Kühlwirkung, da die abgestrahlte erwärmte Luft des Kondensatorabschnitts 9 durch den Lüfter 12 abgeführt wird.

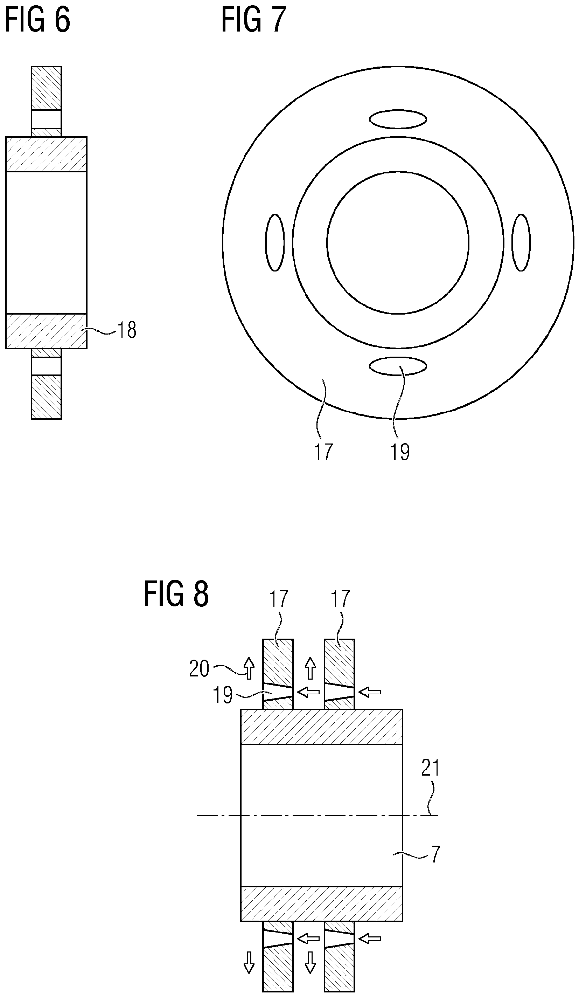

FIG 6 bis FIG 8 zeigen die Anordnung, Ausführung und die Position von Durchbrüchen 19 in den Kühlscheiben 17. Die Außenkontur der Kühlscheiben 17 bleibt geschlossen, sodass die Luft-Reibung bei Rotation nur unwesentlich erhöht wird.

Der Thermosiphon dient gemäß den erfindungsgemäßen Ausführungen zur Kühlung des Rotorblechpakets und damit z.B. eines Kurzschluss-Käfigs im Asynchronmotor. Bei einem Permanenteregten-Synchron-Motor dient der Thermosiphon auch zur Kühlung von Permanentmagneten im Blechpaket des Rotors 5.

In der Kondensatorzone 9 findet die Rückkühlung des Kühlmediums der Hohlwelle 6 z.B. einer Verdampferflüssigkeit über den Lüfter und die Kühlscheiben 17 statt. Dabei ist entscheidend, dass nunmehr in dem vergleichsweise axial kurzen Bereich - also der Kondensatorzone 9 - eine effiziente Rückkühlung der Verdampferflüssigkeit eintritt, um somit eine ausreichende Kühleffizienz der gesamten dynamoelektrischen Maschine 1 zu gewährleisten. Der vergleichsweise axial kurze Abschnitt der Kondensatorzone 9 gewährleistet außerdem einen kompakten Aufbau der dynamoelektrischen Maschine 1.

Vorteilhafterweise sind zumindest im Kondensatorabschnitt 9 mikroskalige Strukturen vorhanden, die im Inneren der Hohlwelle 6 mit einem im Wesentlichen konischen Verlauf Richtung Verdampferzone 8 ausgeführt sind, um einen dementsprechenden Rücktransport des Kühlmediums in die Verdampferzone 8 der Hohlwelle 6 zu unterstützen.

Diese mikroskalige Struktur weist dabei grundsätzlich Rippen und/oder Prismen und/oder Hohlkörper und/oder oberflächenvergrößernde Strukturen auf.

In der Verdampferzone 8 wird ein Kühlmedium unter Aufnahme von Wärme verdampft und in der Kondensatorzone 9 rückgekühlt. Insbesondere in der Transportzone 10 können geeignete Füllkörper in der Hohlwelle 6 den Transport des verdampften und/oder rückgekühlten Kühlmediums verbessern. Dies ist dann vor allem von Vorteil, wenn die Hohlwelle 6 in unterschiedlichsten räumlichen Anordnungen eingesetzt ist, beispielsweise bei Hohlwellen in Fahrzeugen, die im schwergängigen Gelände unterwegs sind.

Die Kondensatorzone 9 weist einen axial verlaufenden Stutzen auf, über den beispielsweise das Kühlmittel zugeführt und/oder der Betriebsdruck des Thermosiphons eingestellt werden kann. Der Stutzen 21 ist im Betrieb der dynamoelektrischen Maschine 1 verschlossen, um den Kühlkreislauf aufrechterhalten zu können.

Derartige dynamoelektrische Maschinen 1 werden u.a. als Antrieb, insbesondere in der Fahrzeugtechnik, bei E-Cars, Schienenfahrzeugen, Mining-Trucks etc. verwendet, da nunmehr auch ohne eine Durchzugsbelüftung eine ausreichende Kühlung des Rotors 5 geschaffen ist. Eine Durchzugsbelüftung führt bei stark staubhaltiger Luft und/oder alternierendem Betrieb des Motors mit Stillstandszeiten zu unzureichender Kühlung vor allem des Rotors 5.

In der Fahrzeugtechnik sind aufgrund der dort vorgegebenen eingeschränkten Platzverhältnisse kompakte, leistungsstarke Antriebe gefordert, die nunmehr durch eine kompakte dynamoelektrische Maschine 1 erfüllt werden.

### Bezugszeichenliste

- 1: Dynamoelektrische Maschine
- 2: Stator
- 3: Wicklungssystem
- 4: Wickelkopf
- 5: Rotor
- 6: Hohlwelle
- 7: Hohlraum
- 8: Verdampferzone
- 9: Kondensatorzone
- 10: Transportabschnitt
- 11: Lager
- 12: Lüfter
- 13: Lüfterhaube1
- 14: Kühlrippen
- 15: Lagerschild
- 16: axiale Wellenverlängerung
- 17: Scheibe
- 18: Scheibensegment
- 19: Durchbruch
- 20: Luftstrom
- 21: Achse
- 22: Luftauslass
- 23: Lufteinlass

## Patentansprüche

1. Rotatorische dynamoelektrische Maschine (1) mit einem Stator (2) und einen um eine Achse (21) drehbar gelagerten Rotor (5),
wobei der Rotor (5) mit einer Hohlwelle (6) drehfest und thermisch leitend verbunden ist,
wobei die Hohlwelle (6), einen abgeschlossenen Hohlraum bildet und als Thermosiphon ausgebildet ist, der axial zumindest eine Verdampferzone (8) und eine Kondensatorzone (9) aufweist, wobei die Kondensatorzone (9) zumindest einen Lüfter (12) und zumindest eine thermisch an die Hohlwelle (6) gekoppelte Kühlscheibe (17) aufweist, wobei Lüfter (12) und Kühlscheibe (17) koaxial zur Hohlwelle (6) angeordnet sind und über die Wandung der Hohlwelle (6) thermisch leitend mit dem Kondensatorabschnitt (9) verbunden sind.

2. Rotatorische dynamoelektrische Maschine (1) nach Anspruch 1, **dadurch gekenn- zeichnet**, dass die Kühlscheiben (17) modulartig aufgebaut sind, indem pro Modul (18) eine oder mehrere Kühlscheiben (17) vorgesehen sind, die auf der Hohlwelle (6) thermisch leitend koaxial anbringbar sind.

3. Rotatorische dynamoelektrische Maschine (1) nach Anspruch 1 oder 2, **dadurch ge- kennzeichnet**, dass die Kühlscheiben (17) bzw. Kühlscheibenmodule (18) axial vor und/oder nach dem Lüfter (12) angebracht sind.

4. Rotatorische dynamoelektrische Maschine (1) nach einem der vorhergehenden Ansprüche, **dadurch gekennzeichnet, dass** der Lüfter (12) und/oder die Kühlscheiben (17) Durchbrüche (19) aufweisen.

5. Rotatorische dynamoelektrische Maschine (1) nach einem der vorhergehenden Ansprüche, **dadurch gekennzeichnet, dass** zumindest die Kondensatorzone (9) eine mikroskalige Struktur aufweist, wobei die mikroskalige Struktur als rippenartige Struktur und/oder zapfenförmige Struktur und/oder porenartige Vernetzung ausgebildet ist und wobei diese Struktur thermisch leitend mit einer inneren Wandung der Hohlwelle (6) der Kondensatorzone (9) verbunden ist.

6. Rotatorische dynamoelektrische Maschine (1) nach einem der vorhergehenden Ansprüche, **dadurch gekennzeichnet, dass** zumindest die Kondensatorzone (9) zumindest abschnittsweise konisch verlaufend ausgebildet ist.

7. Fahrzeug, wie ein E-Car, ein Schienenfahrzeug oder ein Mining-Truck mit zumindest einer rotatorischen dynamoelektrischen Maschine (1) nach einem der vorhergehenden Ansprüche.

8. Verwendung einer rotatorischen dynamoelektrischen Maschine (1) nach einem der Ansprüche 1 bis 6 in der Nahrungsmittelindustrie oder im industriellen Umfeld, als Antrieb für Pumpen, Verdichter, Kompressoren, Lüfter.
